# EUROPEAN PATENT APPLICATION

(11) **EP 4 513 232 A1**
(43) Date of publication of application: **26.02.2025**
(21) Application number: 23193598.2
(22) Date of filing: 25.08.2023
(51) Int. Cl.: G01S 7/486, G01S 7/4912, G01S 17/894

(54) **SEMICONDUCTOR CHIP AND METHOD FOR ADJUSTING AN EXPOSURE TIME OF A TIME-OF-FLIGHT SENSOR**

(71) Applicant: Infineon Technologies AG, 85579 Neubiberg (DE)
(72) Inventor: SCHÖNLIEB-STALZER, Armin Josef, 8054 Seiersberg-Pirka (AT); LOBNIK, Robert, 9135 Eisenkappel-Vellach (AT); PLANK, Hannes, 8010 Graz (AT); SCHICKBICHLER, Wolfgang, 8605 Kapfenberg (AT)
(74) Representative: 2SPL Patentanwälte PartG mbB

(57) **Abstract**

A semiconductor chip is provided. The semiconductor chip includes a Time-of-Flight (ToF) sensor configured to generate a respective measurement value for a plurality of photosensitive pixels of the ToF sensor. Additionally, the semiconductor chip includes processing circuitry configured to determine a number of pixels for which the respective measurement value satisfies a predetermined criterion. The processing circuitry is further configured to adjust an exposure time of the ToF sensor based on the determined number of pixels for which the respective measurement value satisfies the predetermined criterion.

## Description

### Field

The present disclosure relates to exposure time adjustment for Time-of-Flight (ToF) sensors. In particular, examples of the present disclosure relate to a semiconductor chip and a method for adjusting an exposure time of a ToF sensor.

### Background

The amount of reflected light is critical for a ToF measurement. If there is too much light, a ToF pixel saturates. On the other hand, if there is too little light, the ToF measurement is noisy. For example, in mobile applications, it is common to maximize the light exposure, which can cause saturation of bright objects.

Hence, there may be a demand for exposure time adjustment for a ToF sensor.

### Summary

This demand is met by the subject-matter of the independent claims. Advantageous embodiments are addressed by the dependent claims.

According to a first aspect, the present disclosure provides a semiconductor chip. The semiconductor chip comprises a ToF sensor configured to generate a respective measurement value for a plurality of photo-sensitive pixels of the ToF sensor. Additionally, the semiconductor chip comprises processing circuitry configured to determine a number of pixels for which the respective measurement value satisfies a predetermined criterion. The processing circuitry is further configured to adjust an exposure time of the ToF sensor based on the determined number of pixels for which the respective measurement value satisfies the predetermined criterion.

According to a second aspect, the present disclosure provides a method for adjusting an exposure time of a ToF sensor. The ToF sensor generates a respective measurement value for a plurality of photo-sensitive pixels of the ToF sensor. The method comprises determining, by processing circuitry implemented in the same semiconductor chip as the ToF sensor, a number of pixels for which the respective measurement value satisfies a predetermined criterion. Further, the method comprises adjusting, by the processing circuitry, an exposure time of the ToF sensor based on the determined number of pixels for which the respective measurement value satisfies the predetermined criterion.

By adjusting the exposure time of the ToF sensor on-chip based on the measurement values of the ToF sensor, the exposure time of the ToF sensor may be adjusted very fast. For example, the exposure time adjustment may be performed during readout of the ToF sensor. Compared to solutions using off-chip processing, exposure time adjustment may be sped up significantly as delay times for transferring measurement data to off-chip circuitry and transferring control data for the exposure time adjustment back to the chip may be avoided. Accordingly, no energy is wasted for ToF imaging with improper exposure time settings.

### Brief description of the Figures

Some examples of apparatuses and/or methods will be described in the following by way of example only, and with reference to the accompanying figures, in which
Fig. 1 illustrates an example of a semiconductor chip; and
Fig. 2 illustrates a flowchart of an example of a method for adjusting an exposure time of a ToF sensor.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

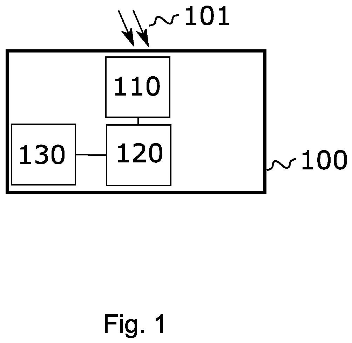

**Fig. 1** schematically illustrates a semiconductor chip 100. The semiconductor chip 100 is an electronic device made of semiconductor material such as silicon.

The semiconductor chip 110 comprises at least a ToF sensor 110. The ToF sensor 110 comprises a plurality of photo-sensitive sensor pixels (i.e., N ≥ 2 photo-sensitive sensor pixels). Each photo-sensitive sensor pixel comprises a semiconductor material/substrate (e.g. silicon). Incident light 101 penetrates the semiconductor material of the respective photo-sensitive sensor pixel and causes generation of charge carriers (e.g. electrons or holes) in the semiconductor material. Further, each photo-sensitive sensor pixel comprises at least two charge storages (i.e., M ≥ 2 of charge storage per pixel). The charges storages may also be referred to as "buckets" or "charge buckets" by those skilled in the art. For example, the at least two charge storages may be capacitors or potential wells formed in the semiconductor material of the respective photo-sensitive sensor pixel. The at least two charge storages allow to selectively store (accumulate, integrate) the generated charge carriers (for sensor pixels implemented as integrating sensor pixels) or to selectively deplete the charges storages based on the generated charge carriers (for sensor pixels implemented as down-integrating pixels). Each photo-sensitive sensor pixel further comprises control gates for controlling the flow of the generated charge carriers inside the respective photo-sensitive sensor pixel (e.g. two or more modulation gates and/or one or more drain gates) and read-out terminals for reading out the at least two charge storages. For example, at least one (e.g., all) of the plurality of photo-sensitive sensor pixels may be a Photonic Mixer Device (PMD) or a Charge-Coupled Device (CCD).

The ToF sensor 110 may comprise an illumination element (device, circuitry) configured to illuminate the scene with modulated light for the ToF measurement. In other examples, the illumination element may be separate from the ToF sensor 110. In these examples, the illumination element may be implemented on the semiconductor chip 100 or external to the semiconductor chip 100 (i.e., not on the semiconductor chip 100). For example, the illumination element may be configured to emit modulated light pulses (i.e. modulated light) to the scene (infrared light pulses). The incident light 101 includes reflections of the emitted modulated light (e.g. emitted light pulses) by one or more objects in the scene. The illumination element may comprise any number of light sources. The illumination element may, e.g., comprise one or more Light-Emitting Diodes (LEDs) and/or one or more laser diodes (e.g. one or more Vertical-Cavity Surface-Emitting Lasers, VCSELs) which are fired based on an illumination signal. The ToF sensor 110 may optionally comprise further components such as, e.g., optics (e.g. one or more lenses) and electronic circuitry (e.g. read-out circuitry or Analog-to-Digital Converter, ADC, circuitry). The optics may be formed on the semiconductor chip 100.

When performing a ToF measurement of a scene, the ToF sensor 110 is configured to generate a respective measurement value for the plurality of photo-sensitive sensor pixels of the ToF sensor 110. The ToF sensor 110, in particular the plurality of photo-sensitive sensor pixels of the ToF sensor 110 may use direct or indirect measurement principles for generating the measurement values for the plurality of photo-sensitive pixels of the ToF sensor 110. For example, the measurement values for the plurality of photo-sensitive pixels of the ToF sensor 110 may be the analog output voltages of the plurality of photo-sensitive sensor pixels of the ToF sensor 110 or the digitized output voltages of the plurality of photo-sensitive sensor pixels of the ToF sensor 110 (e.g., generated by an ADC of the ToF sensor based on the analog output voltages of the plurality of photo-sensitive pixels of the ToF sensor 110). In some examples, the ToF sensor 110 may be configured to generate a respective measurement value for each of the at least two charge storages of the respective photo-sensitive sensor pixel. The measurement values for each of the plurality of photo-sensitive pixels of the ToF sensor 110 represent the measured charge levels of the respective at least two charge storages of the respective photo-sensitive sensor pixel. In other examples, the ToF sensor 110 may be configured to generate a single combined measurement value for the at least two charge storages of the respective photo-sensitive sensor pixel. In these examples, the measurement value may, e.g., represent the difference between the measured charge levels of the respective at least two charge storages of the of the respective photo-sensitive sensor pixel.

Additionally, the semiconductor chip 100 comprises processing circuitry 120 coupled to the ToF sensor 110 via one or more electrically conductive traces in and/or on the semiconductor chip 100. In other words, the semiconductor chip 100 holds both the ToF sensor 110 and the processing circuitry 120. That is, the ToF sensor 110 and the processing circuitry 120 are formed in the same (i.e., a single) semiconductor chip 100. The processing circuitry 120 is configured to receive and process the measurement values for the plurality of photo-sensitive pixels of the ToF sensor 110 on-chip. In particular, the processing circuitry 120 is configured to receive the measurement values for the plurality of photo-sensitive pixels of the ToF sensor 110 via the one or more electrically conductive traces in and/or on the semiconductor chip 110 from the ToF sensor 110. For example, the processing circuitry 120 may be a single dedicated processor, a single shared processor, a digital signal processor (DSP) hardware, an application specific integrated circuit (ASIC), or a field programmable gate array (FPGA). The processing circuitry 120 may optionally be coupled to, e.g., memory such as read only memory (ROM) for storing software, random access memory (RAM) and/or non-volatile memory. For example, the semiconductor chip 100 may comprise memory configured to store instructions, which when executed by the processing circuitry 120, cause the processing circuitry 120 to perform the steps and methods described herein.

In case multiple measurement values are generated by the ToF sensor 110 for a ToF measurement for the respective photo-sensitive pixel of the ToF sensor 110, it is sufficient that the processing circuitry 120 processes one of them. For example, if each of the plurality of photo-sensitive pixels of the ToF sensor 110 comprises two charges storages A and B, only the measurement values representing the measured charge level for the respective charge storage A of the respective photo-sensitive pixel may be processed by the processing circuitry 120. Therefore, in the following, the processing of only a single measurement value for the respective photo-sensitive pixel of the ToF sensor 110 is described. The processing of multiple measurement values for the respective photo-sensitive pixel of the ToF sensor 110 will be described later.

The processing circuitry 120 is configured to determine a number of photo-sensitive sensor pixels for which the respective measurement value satisfies a (first) predetermined criterion. The predetermined criterion is a standard used to evaluate or decide whether a respective one of the plurality of photo-sensitive pixels of the ToF sensor 110 is counted. The predetermined criterion may be (selected) based on characteristics of the ToF sensor 110. For example, if the photo-sensitive sensor pixels of the ToF sensor 110 are integrating sensor pixels and selectively store the generated charge carriers in the at least to charge storages, the predetermined criterion may be that the respective measurement value is above a first threshold value. Accordingly, the predetermined criterion allows to determine whether the brightness (i.e., the amount of light) measured by the respective photo-sensitive sensor pixel of the ToF sensor 110 is above a predetermined threshold. For example, the first threshold value may be at least 75 %, 80 %, 85 %, 90 % or 95 % of the maximum charge level of (supported by) the respective charge storage. In other words, the comparison of the measurement values to the first threshold value allows to determine whether the respective photo-sensitive sensor pixel is exposed to high brightness (i.e., a high amount of light) during the ToF measurement. On the other hand, if the photo-sensitive sensor pixels of the ToF sensor 110 are down-integrating sensor pixels and selectively reduce a respective initial charge in the at least two charge storages based on the generated charge carriers, the predetermined criterion may be that the respective measurement value is below the first threshold value. Again, the comparison to the first threshold value allows to determine whether the brightness (i.e., the amount of light) measured by the respective photo-sensitive sensor pixel of the ToF sensor 110 is above the predetermined threshold. For example, the first threshold value may be at maximum 25 %, 20 %, 15 %, 10 % or 5 % of the maximum charge level of (supported by) the respective charge storage. However, it is to be noted that the present disclosure is not limited to the two above examples for the predetermined criterion. Other suitable criteria may be used as well.

The processing circuitry 120 is further configured to adjust an exposure time of the ToF sensor 110 based on the determined number of photo-sensitive sensor pixels for which the respective measurement value satisfies the predetermined criterion. The exposure time denotes a single continuous period of time (time interval) for sensing the scene in which the photo-sensitive sensor pixels of the ToF sensor 110 are active and exposed to the incident light arriving from the scene. In other words, the photo-sensitive sensor pixels of the ToF sensor 110 are exposed to the incident light arriving from the scene and are actively and continuously measuring the incident light arriving from the scene for the exposure time in order to sense the scene.

As described above, a photo-sensitive sensor pixel of the ToF sensor 110 satisfying the predetermined criterion is a sensor pixel measuring a brightness (an amount of light) above a predetermined threshold. Accordingly, the number of photo-sensitive sensor pixels for which the respective measurement value satisfies the predetermined criterion denotes the fraction of sensor pixels measuring a high brightness, i.e., a large amount of light. A high number of photo-sensitive sensor pixels for which the respective measurement value satisfies the predetermined criterion may, hence, indicate that the ToF sensor 110 may be close to saturation. Analogously, a low number of photo-sensitive sensor pixels for which the respective measurement value satisfies the predetermined criterion may indicate that the ToF sensor 110 is not close to / far away from saturation. That is, the number of photo-sensitive sensor pixels for which the respective measurement value satisfies the predetermined criterion is an indicator whether the current exposure time setting for the ToF sensor 110 is proper (suitable). Accordingly, the processing circuitry 120 may, e.g., expand (increase) or reduce (decrease) the exposure time based on the determined number of photo-sensitive sensor pixels for which the respective measurement value satisfies the predetermined criterion.

By adjusting the exposure time of the ToF sensor 110 on-chip based on the measurement values of the ToF sensor 110, the exposure time of the ToF sensor 110 may be adjusted very fast. For example, the exposure time adjustment may be performed during readout of the ToF sensor 110. Compared to solutions using off-chip processing, exposure time adjustment may be sped up significantly as delay times for transferring measurement data to off-chip circuitry and transferring control data for the exposure time adjustment back to the chip may be avoided. Accordingly, ToF imaging with improper exposure time settings may be avoided.

For example, the processing circuitry 120 may be configured to reduce the exposure time of the ToF sensor 110 if the determined number of photo-sensitive sensor pixels for which the respective measurement value satisfies the predetermined criterion is above a second threshold value. The comparison to the second threshold value allows to determine whether too many of the photo-sensitive sensor pixels are exposed to a high amount of light during the ToF measurement. In other words, the comparison to the second threshold value allows to determine whether too many of the photo-sensitive sensor pixels are close to saturation. For example, the second threshold may be at least 50 %, 55 %, 60 %, 65 %,70 %, 75 %,80 %, 85 %,90 % or 95 % of the total number of ToF sensor 110's photo-sensitive sensor pixels.

In general, any reduction of the exposure time may be applied by the processing circuitry 120. For example, the currently used exposure time may be reduced by a predetermined absolute amount of time if the determined number of photo-sensitive sensor pixels for which the respective measurement value satisfies the predetermined criterion is above the second threshold value (e.g., by a few ten nanoseconds or a few ten microseconds). Similarly, the currently used exposure time may be reduced by a predetermined relative amount of time if the determined number of photo-sensitive sensor pixels for which the respective measurement value satisfies the predetermined criterion is above the second threshold value (e.g., by 5 %, 10 %, 25 % or 50 % of the current exposure time).

In some examples, the processing circuitry 120 may be configured to determine an amount of exposure time reduction based on the determined number of photo-sensitive sensor pixels for which the respective measurement value satisfies the predetermined criterion and reduce the exposure time of the ToF sensor by the determined amount of exposure time reduction. For example, one or more predefined rules may be used for determining the exposure time reduction based on the determined number of photo-sensitive sensor pixels for which the respective measurement value satisfies the predetermined criterion. The value of the exposure time reduction may increase with increasing number of photo-sensitive sensor pixels for which the respective measurement value satisfies the predetermined criterion. For example, a Proportional-Integral-Derivative (PID) control loop may be used to determine the amount of exposure time reduction for the exposure time based on the determined number of photo-sensitive sensor pixels for which the respective measurement value satisfies the predetermined criterion. In other examples, the amount of exposure time reduction may be a first absolute amount of time or a first relative amount of time if the number the determined number of photo-sensitive sensor pixels for which the respective measurement value satisfies the predetermined criterion is higher than a first count value and the amount of exposure time reduction may be a second absolute amount of time or a second relative amount of time if the number the determined number of photo-sensitive sensor pixels for which the respective measurement value satisfies the predetermined criterion is higher than a second count value. The first and second count values are threshold values for determining the amount of exposure time reduction. The second count value is higher than the first count value. Analogously, the second absolute amount of time or the second relative amount of time is larger than the respective one of the first absolute amount of time or the first relative amount of time. Likewise, further count values and further absolute/relative amounts of time (i.e., a third, a fourth, etc.) may be used.

The processing circuitry 120 may be configured to set the exposure time of the ToF sensor 110 to the maximum exposure time (supported by the ToF sensor 110) if the determined number of photo-sensitive sensor pixels for which the respective measurement value satisfies the predetermined criterion is below a third threshold value. The comparison to the third threshold value allows to determine whether none or almost none of the photo-sensitive sensor pixels is exposed to a high amount of light during the ToF measurement. In other words, the comparison to the third threshold value allows to determine whether none or almost none of the photo-sensitive sensor pixels is close to saturation. For example, the second threshold may be at maximum 10 %, 5 %, 1 %, or 0.1 % of the total number of ToF sensor 110's photo-sensitive sensor pixels.

As described above, the predetermined criterion allows to determine whether the brightness (i.e., the amount of light) measured by the respective photo-sensitive sensor pixel of the ToF sensor 110 is above a predetermined threshold. According to the present disclosure, a single criterion or multiple criteria may be used. For example, multiple criteria corresponding to different thresholds for the brightness (i.e., the amount of light) measured by the respective photo-sensitive sensor pixel of the ToF sensor 110 may be used. Using multiple criteria may allow to improve the granularity of the exposure time adjustment. For example, the processing circuitry 120 may additionally be configured to determine a number of photo-sensitive sensor pixels for which the respective measurement value satisfies a second predetermined criterion. The second predetermined criterion is different from the first predetermined criterion. For example, if the photo-sensitive sensor pixels of the ToF sensor 110 are integrating sensor pixels and the first predetermined criterion is that the respective measurement value is above 75 % of the maximum charge level of the respective charge storage, the second predetermined criterion may be that the respective measurement value is above 90 % of the maximum charge level of the respective charge storage. Likewise, further predetermined criteria (i.e., a third criterion, a fourth criterion, etc.) may be used. The processing circuitry 120 may be further configured to adjust the exposure time of the ToF sensor 110 based on the determined number of photo-sensitive sensor pixels for which the respective measurement value satisfies the second predetermined criterion. For example, the processing circuitry 120 may be configured to determine the amount of exposure time reduction based on the determined number of photo-sensitive sensor pixels for which the respective measurement value satisfies the first predetermined criterion and based on the determined number of photo-sensitive sensor pixels for which the respective measurement value satisfies the second predetermined criterion. In other examples, the processing circuitry 120 may only set the exposure time of the ToF sensor 110 to the maximum exposure time if the determined number of photo-sensitive sensor pixels for which the respective measurement value satisfies the predetermined criterion is below the third threshold value and if the determined number of photo-sensitive sensor pixels for which the respective measurement value satisfies the second predetermined criterion is below another threshold value (which may be equal to or different from the third threshold value).

The processing circuitry 120 may use a respective counter for determining the respective number of photo-sensitive sensor pixels for which the respective measurement value satisfies the respective predetermined criterion (i.e., the first, second, etc. criterion).

The respective number of photo-sensitive sensor pixels for which the respective measurement value satisfies the respective predetermined criterion may be determined for a single ToF measurement as described above. However, the present disclosure is not limited thereto. The respective number of photo-sensitive sensor pixels may also be determined based on multiple ToF measurements by the ToF sensor 110. For example, the processing circuitry 120 may be configured to determine the number of pixels for which the respective measurement value satisfies the predetermined criterion by accumulating the respective number of photo-sensitive sensor pixels for which the respective measurement value satisfies the predetermined criterion over multiple ToF measurements. Similarly, the processing circuitry 120 may be configured to determine the number of pixels for which the respective measurement value satisfies the predetermined criterion by averaging the respective number of photo-sensitive sensor pixels for which the respective measurement value satisfies the predetermined criterion over multiple ToF measurements. The above mentioned exemplary predetermined criteria may be adapted accordingly. Determining the respective number of photo-sensitive sensor pixels based on multiple ToF measurements by the ToF sensor 110 may, e.g., allow to iron out outliers in individual ToF measurements and perform exposure time adjustment based on measurement values collected over a longer period of time.

As described above, also multiple measurement values for the respective photo-sensitive pixel of the ToF sensor 110 may be processed by the processing circuitry 120 for the exposure time adjustment. That is, the ToF sensor 110 (in particular the plurality of photo-sensitive sensor pixels of the ToF sensor 110) is configured to generate at least a respective measurement value and additionally generate a respective second measurement value for the plurality of photo-sensitive sensor pixels. As described above, one of the measurement value for the respective photo-sensitive sensor pixel of the ToF sensor 110 is based on the charge level of a first charge storage of the respective photo-sensitive sensor pixel and the second measurement value is based on a charge level of a different second charge storage of the respective photo-sensitive sensor pixel.

In these examples, in addition to the processing described above, the processing circuitry 110 may further be configured to determine a number of pixels for which the respective second measurement value satisfies a third predetermined criterion. The third predetermined criterion is analogous to the (first) predetermined criterion described above. For example, if the photo-sensitive sensor pixels of the ToF sensor 110 are integrating sensor pixel and the (first) predetermined criterion is that the respective measurement value is above the first threshold value (see above for the details), the third predetermined criterion is that the respective second measurement value is below a threshold value. In other examples, if the photo-sensitive sensor pixels of the ToF sensor 110 are down-integrating sensor pixel and the (first) predetermined criterion is that the respective measurement value is below the first threshold value (see above for the details), the third predetermined criterion is that the respective second measurement value is above a third threshold value. In both examples, the first threshold value and the third threshold value may be identical. Accordingly, the charge levels of both charge storages of the respective photo-sensitive sensor pixel are treated equally for the exposure time adjustment. However, it is to be noted that in other examples the first threshold value and the third threshold value may be different from each other. For example, while one of the first threshold value and the third threshold value may be at least 75 %, 80 %, 85 %, 90 % or 95 % of the maximum charge level of (supported by) the respective charge storage, the other one of the first threshold value and the third threshold value may at maximum 25 %, 20 %, 15 %, 10 % or 5 % of the maximum charge level of (supported by) the respective charge storage - analogously to what is described above.

In case multiple measurement values for the respective photo-sensitive pixel of the ToF sensor 110 are processed by the processing circuitry 120 for the exposure time adjustment adjust, the processing circuitry 120 is configured to adjust the exposure time of the ToF sensor 100 further based on the determined number of pixels for which the respective second measurement value satisfies the third predetermined criterion. In other words, the processing circuitry 120 adjusts the exposure time of the ToF sensor 110 based on both 1) the determined number of pixels for which the respective second measurement value satisfies the (first) predetermined criterion and 2) the determined number of pixels for which the respective second measurement value satisfies the third predetermined criterion.

Analogously to what is described above for the number of photo-sensitive sensor pixels for which the respective measurement value satisfies the (first) predetermined criterion, the number of photo-sensitive sensor pixels for which the respective second measurement value satisfies the third predetermined criterion is an indicator whether the current exposure time setting for the ToF sensor 110 is proper (suitable). Accordingly, the processing circuitry 120 may, e.g., expand (increase) or reduce (decrease) the exposure time based on the determined number of photo-sensitive sensor pixels for which the respective second measurement value satisfies the third predetermined criterion.

For example, the processing circuitry 120 may be configured to reduce the exposure time of the ToF sensor 110 if at least one of the determined number of pixels for which the respective measurement value satisfies the (first) predetermined criterion and the determined number of pixels for which the respective second measurement value satisfies the third predetermined criterion is above the second threshold value. In some examples, the processing circuitry 120 may be configured to reduce the exposure time of the ToF sensor 110 only if the determined number of pixels for which the respective measurement value satisfies the (first) predetermined criterion and the determined number of pixels for which the respective second measurement value satisfies the third predetermined criterion are both above the second threshold value. Analogously to what is described above for the single measurement value processing case, the comparison to the second threshold value allows to determine whether too many of the photo-sensitive sensor pixels are exposed to a high amount of light during the ToF measurement. In other words, the comparison to the second threshold value allows to determine whether too many of the photo-sensitive sensor pixels are close to saturation. For example, the second threshold may be at least 50 %, 55 %, 60 %, 65 %,70 %, 75 %,80 %, 85 %,90 % or 95 % of the total number of ToF sensor 110's photo-sensitive sensor pixels. In general, any reduction of the exposure time may be applied by the processing circuitry 120. Analogously to what is described above, a predetermined absolute amount of time or a predetermined relative amount of time may be used.

Furthermore, the processing circuitry 120 may be configured to determine the amount of exposure time reduction based on at least one of the determined number of pixels for which the respective measurement value satisfies the (first) predetermined criterion and the determined number of pixels for which the respective second measurement value satisfies the third predetermined criterion. Accordingly, the processing circuitry 120 may be configured to reduce the exposure time of the ToF sensor 110 by the determined amount of exposure time reduction.

Analogously to what is described above for the single measurement value processing case, one or more predefined rules may be used for determining the exposure time reduction based on the determined number of photo-sensitive sensor pixels for which the respective measurement value satisfies the (first) predetermined criterion and/or the determined number of pixels for which the respective second measurement value satisfies the third predetermined criterion. The value of the exposure time reduction may increase with increasing number of photo-sensitive sensor pixels for which the respective measurement value satisfies the (first) predetermined criterion and/or with increasing number of the determined number of pixels for which the respective second measurement value satisfies the third predetermined criterion. For example, a PID control loop may be used to determine the amount of exposure time reduction for the exposure time based on the determined number of photo-sensitive sensor pixels for which the respective measurement value satisfies the (first) predetermined criterion and/or the determined number of pixels for which the respective second measurement value satisfies the third predetermined criterion. However, the present disclosure is not limited to this example. Other approaches may be used as well.

The respective number of photo-sensitive sensor pixels for which the respective second measurement value satisfies the respective third predetermined criterion may be determined for a single ToF measurement as described above. However, the present disclosure is not limited thereto. Analogously to what is described above for the first predetermined criterion, the respective number of photo-sensitive sensor pixels may also be determined based on multiple ToF measurements by the ToF sensor 110. For example, the processing circuitry 120 may be configured to determine the number of pixels for which the respective second measurement value satisfies the third predetermined criterion by accumulating the respective number of photo-sensitive sensor pixels for which the respective second measurement value satisfies the third predetermined criterion over multiple ToF measurements. Similarly, the processing circuitry 120 may be configured to determine the number of pixels for which the respective second measurement value satisfies the third predetermined criterion by averaging the respective second number of photo-sensitive sensor pixels for which the respective second measurement value satisfies the third predetermined criterion over multiple ToF measurements. The above mentioned exemplary predetermined third criteria may be adapted accordingly. Determining the respective number of photo-sensitive sensor pixels based on multiple ToF measurements by the ToF sensor 110 may, e.g., allow to iron out outliers in individual ToF measurements and perform exposure time adjustment based on second measurement values collected over a longer period of time.

For adjusting the exposure time of the ToF sensor 110 in accordance with the above examples, the processing circuitry 120 may, e.g., be configured to send one or more control signals or control data to the ToF sensor 110 via the one or more electrically conductive traces in and/or on the semiconductor chip 110. The ToF sensor 110 may accordingly be configured to receive the one or more control signals or the control data via the one or more electrically conductive traces in and/or on the semiconductor chip 110 from the processing circuitry 120 and further be configured to adjust its exposure time based on the received one or more control signals or the received control data.

The measurement values for the plurality of photo-sensitive pixels may be generated by the ToF sensor 110 for any type of ToF measurement. For example, the measurement values for the plurality of photo-sensitive pixels may be generated by the ToF sensor 110 for one or more ToF measurements for a grey-scale image of the scene, one or more ToF measurements for a depth-image of the scene, one or more ToF measurements for a reflectance measurement of the scene, one or more ToF measurements for detecting motion in the scene, etc. The technology of the present disclosure does not depend on the sensor-response function (correlation function) used by the ToF sensor 110 for the respective ToF measurement. In view of the above, the ToF sensor 120 may further be configured to generate an image based on the measurement values for the plurality of photo-sensitive pixels. For example, the image may be one of a grey-scale image of the scene, a depth-image of the scene, a reflectance image of the scene, or a motion indicating image of the scene. The semiconductor chip 100 may optionally further comprise interface 130 circuitry configured to output the image to circuitry external to the semiconductor chip 100 (i.e., circuitry not implemented in the semiconductor chip 100).

In other examples, the measurement values for the plurality of photo-sensitive pixels may be generated by the ToF sensor 110 for one or more ToF measurements dedicated to exposure time adjustment. Accordingly, the exposure time of the ToF sensor 110 may be properly adjusted for one or more subsequent ToF measurements for a greyscale image, a depth image, etc.

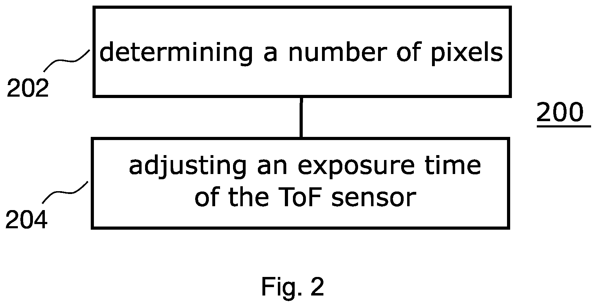

Summarizing the above, Fig. 2 further illustrates a flowchart of an example of a method 200 for adjusting an exposure time of a ToF sensor. The ToF sensor generates a respective measurement value for a plurality of photo-sensitive pixels of the ToF sensor. The method 200 comprises determining 202, by processing circuitry implemented in the same semiconductor chip as the ToF sensor, a number of pixels for which the respective measurement value satisfies a predetermined criterion. Further, the method 200 comprises adjusting 204, by the processing circuitry, an exposure time of the ToF sensor based on the determined number of pixels for which the respective measurement value satisfies the predetermined criterion.

Similar what is described above, the method 200 may allow to adjust the exposure time of the ToF sensor on-chip based on the measurement values of the ToF sensor. Accordingly, the exposure time of the ToF sensor may be adjusted very fast and ToF imaging with improper exposure time settings may be avoided.

More details and aspects of the method 200 are explained in connection with the proposed technique or one or more example described above. The method 200 may comprise one or more additional optional features corresponding to one or more aspects of the proposed technique, or one or more example described above.

Aspects of the present disclosure may allow on-chip processing of the amount of reflected light for a ToF imager. In particular, examples of the present disclosure may provide a direct, on-chip auto-exposure mechanism. Examples of the present disclosure may enable improved current applications and reduce the power consumption as well as the processing effort.

The examples as described herein may be summarized as follows:
Example 1 is a semiconductor chip. The semiconductor chip comprises a ToF sensor configured to generate a respective measurement value for a plurality of photo-sensitive pixels of the ToF sensor. Additionally, the semiconductor chip comprises processing circuitry configured to determine a number of pixels for which the respective measurement value satisfies a predetermined criterion. The processing circuitry is further configured to adjust an exposure time of the ToF sensor based on the determined number of pixels for which the respective measurement value satisfies the predetermined criterion.
Example 2 is the semiconductor chip of example 1, wherein the predetermined criterion is either that the respective measurement value is below a first threshold value or that the respective measurement value is above the first threshold value.
Example 3 is the semiconductor chip of example 1 or example 2, wherein the processing circuitry is configured to reduce the exposure time of the ToF sensor if the determined number of pixels for which the respective measurement value satisfies the predetermined criterion is above a second threshold value.
Example 4 is the semiconductor chip of example 3, wherein the processing circuitry is configured to: determine an amount of exposure time reduction based on the determined number of pixels for which the respective measurement value satisfies the predetermined criterion; and reduce the exposure time of the ToF sensor by the determined amount of exposure time reduction.
Example 5 is the semiconductor chip of any one of examples 1 to 4, wherein the processing circuitry is configured to set the exposure time of the ToF sensor to the maximum exposure time if the determined number of pixels for which the respective measurement value satisfies the predetermined criterion is below a third threshold value.
Example 6 is the semiconductor chip of any one of examples 1 to 5, wherein the processing circuitry is further configured to: determine a number of pixels for which the respective measurement value satisfies a second predetermined criterion, the second predetermined criterion being different from the first predetermined criterion; and adjust the exposure time of the ToF sensor based on the determined number of pixels for which the respective measurement value satisfies the second predetermined criterion.
Example 7 is the semiconductor chip of any one of examples 1 to 6, wherein the processing circuitry is configured to determine the number of pixels for which the respective measurement value satisfies the predetermined criterion by accumulating the respective number of pixels for which the respective measurement value satisfies the predetermined criterion over multiple ToF measurements.
Example 8 is the semiconductor chip of any one of examples 1 to 6, wherein the processing circuitry is configured to determine the number of pixels for which the respective measurement value satisfies the predetermined criterion by averaging the respective number of pixels for which the respective measurement value satisfies the predetermined criterion over multiple ToF measurements.
Example 9 is the semiconductor chip of any one of examples 1 to 8, wherein the ToF sensor is configured to additionally generate a respective second measurement value for the plurality of photo-sensitive pixels, wherein the measurement value is based on a charge level of a first charge storage of the respective photo-sensitive pixel and the second measurement value is based on a charge level of a different second charge storage of the respective photo-sensitive pixel, and wherein the processing circuitry is further configured to: determine a number of pixels for which the respective second measurement value satisfies a third predetermined criterion; and adjust the exposure time of the ToF sensor based on the determined number of pixels for which the respective second measurement value satisfies the third predetermined criterion.
Example 10 is the semiconductor chip of example 9, wherein the predetermined criterion is either that the respective measurement value is below a first threshold value or that the respective measurement value is above the first threshold value, wherein, if the predetermined criterion is that the respective measurement value is below the first threshold value, the third predetermined criterion is that the respective second measurement value is above a third threshold value, and wherein, if the predetermined criterion is that the respective measurement value is above the first threshold value, the third predetermined criterion is that the respective second measurement value is below the third threshold value.
Example 11 is the semiconductor chip of example 10, wherein the first threshold value and the third threshold value are identical.
Example 12 is the semiconductor chip of any one of examples 9 to 11, wherein the processing circuitry is configured to reduce the exposure time of the ToF sensor if at least one of the determined number of pixels for which the respective measurement value satisfies the predetermined criterion and the determined number of pixels for which the respective second measurement value satisfies the third predetermined criterion is above a second threshold value.
Example 13 is the semiconductor chip of example 12, wherein the processing circuitry is configured to: determine an amount of exposure time reduction based on at least one of the determined number of pixels for which the respective measurement value satisfies the predetermined criterion and the determined number of pixels for which the respective second measurement value satisfies the third predetermined criterion; and reduce the exposure time of the ToF sensor by the determined amount of exposure time reduction.
Example 14 is the semiconductor chip of any one of examples 1 to 13, wherein the ToF sensor is further configured to generate an image based on the measurement values for the plurality of photo-sensitive pixels, and wherein the semiconductor chip further comprises interface circuitry configured to output the image.
Example 15 is a method for adjusting an exposure time of a ToF sensor. The ToF sensor generates a respective measurement value for a plurality of photo-sensitive pixels of the ToF sensor. The method comprises determining, by processing circuitry implemented in the same semiconductor chip as the ToF sensor, a number of pixels for which the respective measurement value satisfies a predetermined criterion. Further, the method comprises adjusting, by the processing circuitry, an exposure time of the ToF sensor based on the determined number of pixels for which the respective measurement value satisfies the predetermined criterion.

The aspects and features described in relation to a particular one of the previous examples may also be combined with one or more of the further examples to replace an identical or similar feature of that further example or to additionally introduce the features into the further example.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A semiconductor chip (100), comprising:
a Time-of-Flight, ToF, sensor (110) configured to generate a respective measurement value for a plurality of photo-sensitive pixels of the ToF sensor (110); and
processing circuitry (120) configured to:
determine a number of pixels for which the respective measurement value satisfies a predetermined criterion; and
adjust an exposure time of the ToF sensor (110) based on the determined number of pixels for which the respective measurement value satisfies the predetermined criterion.

2. The semiconductor chip (100) of claim 1, wherein the predetermined criterion is either that the respective measurement value is below a first threshold value or that the respective measurement value is above the first threshold value.

3. The semiconductor chip (100) of claim 1 or claim 2, wherein the processing circuitry (120) is configured to reduce the exposure time of the ToF sensor (110) if the determined number of pixels for which the respective measurement value satisfies the predetermined criterion is above a second threshold value.

4. The semiconductor chip (100) of claim 3, wherein the processing circuitry (120) is configured to:
determine an amount of exposure time reduction based on the determined number of pixels for which the respective measurement value satisfies the predetermined criterion; and
reduce the exposure time of the ToF sensor (110) by the determined amount of exposure time reduction.

5. The semiconductor chip (100) of any one of claims 1 to 4, wherein the processing circuitry (120) is configured to set the exposure time of the ToF sensor (110) to the maximum exposure time if the determined number of pixels for which the respective measurement value satisfies the predetermined criterion is below a third threshold value.

6. The semiconductor chip (100) of any one of claims 1 to 5, wherein the processing circuitry (120) is further configured to:
determine a number of pixels for which the respective measurement value satisfies a second predetermined criterion, the second predetermined criterion being different from the first predetermined criterion; and
adjust the exposure time of the ToF sensor (110) based on the determined number of pixels for which the respective measurement value satisfies the second predetermined criterion.

7. The semiconductor chip (100) of any one of claims 1 to 6, wherein the processing circuitry (120) is configured to determine the number of pixels for which the respective measurement value satisfies the predetermined criterion by accumulating the respective number of pixels for which the respective measurement value satisfies the predetermined criterion over multiple ToF measurements.

8. The semiconductor chip (100) of any one of claims 1 to 6, wherein the processing circuitry (120) is configured to determine the number of pixels for which the respective measurement value satisfies the predetermined criterion by averaging the respective number of pixels for which the respective measurement value satisfies the predetermined criterion over multiple ToF measurements.

9. The semiconductor chip (100) of any one of claims 1 to 8, wherein the ToF sensor (110) is configured to additionally generate a respective second measurement value for the plurality of photo-sensitive pixels, wherein the measurement value is based on a charge level of a first charge storage of the respective photo-sensitive pixel and the second measurement value is based on a charge level of a different second charge storage of the respective photo-sensitive pixel, and wherein the processing circuitry (120) is further configured to:
determine a number of pixels for which the respective second measurement value satisfies a third predetermined criterion; and
adjust the exposure time of the ToF sensor (110) based on the determined number of pixels for which the respective second measurement value satisfies the third predetermined criterion.

10. The semiconductor chip (100) of claim 9, wherein the predetermined criterion is either that the respective measurement value is below a first threshold value or that the respective measurement value is above the first threshold value, wherein, if the predetermined criterion is that the respective measurement value is below the first threshold value, the third predetermined criterion is that the respective second measurement value is above a third threshold value, and wherein, if the predetermined criterion is that the respective measurement value is above the first threshold value, the third predetermined criterion is that the respective second measurement value is below the third threshold value.

11. The semiconductor chip (100) of claim 10, wherein the first threshold value and the third threshold value are identical.

12. The semiconductor chip (100) of any one of claims 9 to 11, wherein the processing circuitry (120) is configured to reduce the exposure time of the ToF sensor (110) if at least one of the determined number of pixels for which the respective measurement value satisfies the predetermined criterion and the determined number of pixels for which the respective second measurement value satisfies the third predetermined criterion is above a second threshold value.

13. The semiconductor chip (100) of claim 12, wherein the processing circuitry (120) is configured to:
determine an amount of exposure time reduction based on at least one of the determined number of pixels for which the respective measurement value satisfies the predetermined criterion and the determined number of pixels for which the respective second measurement value satisfies the third predetermined criterion; and
reduce the exposure time of the ToF sensor (110) by the determined amount of exposure time reduction.

14. The semiconductor chip (100) of any one of claims 1 to 13, wherein the ToF sensor (110) is further configured to generate an image based on the measurement values for the plurality of photo-sensitive pixels, and wherein the semiconductor chip (100) further comprises interface circuitry (130) configured to output the image.

15. A method (200) for adjusting an exposure time of a Time-of-Flight, ToF, sensor, wherein the ToF sensor generates a respective measurement value for a plurality of photo-sensitive pixels of the ToF sensor, the method comprising:
determining (202), by processing circuitry implemented in the same semiconductor chip as the ToF sensor, a number of pixels for which the respective measurement value satisfies a predetermined criterion; and
adjusting (204), by the processing circuitry, an exposure time of the ToF sensor based on the determined number of pixels for which the respective measurement value satisfies the predetermined criterion.
